# EUROPÄISCHE PATENTSCHRIFT

(11) **EP 1 743 791 B1**
(45) Veröffentlichungstag und Bekanntmachung des Hinweises auf die Patenterteilung: **11.08.2010**
(21) Anmeldenummer: 06010444.5
(22) Anmeldetag: 20.05.2006
(51) Int. Cl.: B62D 33/02, B60J 5/06

(54) **Einrichtung zum Festlegen einer Runge im Bereich eines Nutzfahrzeugaufbaus**
Arrangement for fixing a stanchion in the area of the upper structure of a utility vehicle
Dispositif de fixation d'un rancher au niveau de la structure supérieure d'un véhicule utilitaire

(30) Priorität: 16.07.2005 DE 102005033318
(43) Veröffentlichungstag der Anmeldung: 17.01.2007
(73) Patentinhaber: F. HESTERBERG & SÖHNE GmbH & Co. KG, 58256 Ennepetal (DE)
(72) Erfinder: Tiedtke, Henning, 58256 Ennepetal (DE); Bosch, Heiko, 58339 Breckerfeld (DE)
(74) Vertreter: Christophersen, Ulrich Rudolf

(56) Entgegenhaltungen:
- DE-U1- 20 205 984
- FR-A- 2 494 203
- FR-A- 2 774 353

## Beschreibung

Die Erfindung betrifft eine Einrichtung zum Festlegen einer, insbesondere verschiebbar ausgebildeten, Runge im Bereich eines Nutzfahrzeugaufbaus, zumindest beinhaltend ein Rungenprofil, das, relativ zum Nutzfahrzeugaufbau schwenkbar, im Bereich eines mit dem Nutzfahrzeugaufbau verbundenen Rungenlagers in verriegelnder bzw. entriegelnder Weise in Wirkverbindung steht bzw. daraus entfernbar ist, wobei ein in Längsrichtung des Rungenprofils bewegbarer Schieber vorgesehen ist.

Nutzfahrzeugaufbauten beinhalten üblicherweise einen äußeren Rahmenbereich, auf welchem stationäre und relativ zum Nutzfahrzeugaufbau verschiebbare Rungen positioniert sind, die das Dach des Nutzfahrzeugaufbaus tragen. Zur Erzeugung von Öffnungen im Bereich des Dachaufbaus müssen verschiebbare Rungen vorgesehen werden, die im geschlossenen Zustand des Dachaufbaus relativ zum Rahmen festzulegen sind.

Eine Einrichtung zum Festlegen einer Runge mit den eingangs angegebenen Merkmalen ist aus der FR 2 494 203 A bekannt. Das in Bezug auf den Nutzfahrzeugaufbau sowohl verschiebbare als auch schwenkbare Rungenprofil lässt sich mittels eines in dem Rungenprofil längsbeweglichen Schiebers verriegeln. Die Verriegelung erfolgt nicht unmittelbar an dem eigentlichen Rungenlager, sondern gegenüber einem Bolzen, welcher Bestandteil einer schwenkbar an dem Rungenprofil gelagerten Schwinge ist. Zum Festlegen der Runge schnappt das Ende des Schiebers hinter den an der Schwinge befestigten Bolzen, wodurch das Rungenprofil gegenüber der Schwinge festgelegt ist.

Ziel des Erfindungsgegenstandes ist es, eine Einrichtung zum Festlegen einer, insbesondere verschiebbar ausgebildeten, Runge im Bereich eines Nutzfahrzeugaufbaus bereit zu stellen, die kostengünstig herstellbar ist und mit einfachen Mitteln in verriegelnder bzw. entriegelnder Weise mit dem Rahmen des Nutzfahrzeugaufbaus in Wirkverbindung bringbar ist.

Dieses Ziel wird erreicht durch eine Einrichtung zum Festlegen einer, insbesondere verschiebbar ausgebildeten, Runge im Bereich eines Nutzfahrzeugaufbaus, zumindest beinhaltend ein Rungenprofil, das, relativ zum Nutzfahrzeugaufbau schwenkbar, im Bereich eines mit dem Nutzfahrzeugaufbau verbundenen Rungenlagers in verriegelnder bzw. entriegelnder Weise in Wirkverbindung steht bzw. daraus entfernbar ist, wobei ein in Längsrichtung des Rungenprofils bewegbarer Schieber vorgesehen ist, wobei der Schieber in dem dem Rungenlager zugewandten Endbereich des Rungenprofils vorgesehen ist und wobei der Schieber Verriegelungsmittel beinhaltet, die im Verlauf des Schwenkvorgangs des Rungenprofils in einem Verriegelungsbereich des Rungenlagers positionierbar bzw. daraus entfernbar sind, wobei die Verriegelungsmittel durch Bolzen gebildet sind, die im Bereich entsprechend geformter Verriegelungsbereiche des Rungenlagers einbringbar bzw daraus entfernbar sind.

Vorteilhafte Weiterbildungen des Erfindungsgegenstandes sind den Unteransprüchen zu entnehmen.

Mit dem Erfindungsgegenstand ist es möglich, auf einfache und kostengünstige Art und Weise eine Verriegelung der jeweils zu verschiebenden Runge gegenüber dem Nutzfahrzeugaufbau herzustellen bzw. die Verriegelung aufzuheben, um die jeweilige Runge samt Dachaufbau parallel zum Rahmen des Nutzfahrzeugaufbaus verschieben zu können. Üblicherweise kommen hier Curtainsiderrungen zum Einsatz.

Der Erfindungsgegenstand ist anhand eines Ausführungsbeispiels in der Zeichnung dargestellt und wird wie folgt beschrieben. Es zeigen:
- Figur 1: Prinzipskizze der erfindungsgemäßen Einrichtung zum Festlegen einer Runge im Bereich eines Nutzfahrzeugaufbaus;
- Figur 2: Querschnitt durch Figur 1;
- Figur 3: Teilansicht des Verriegelungs-/Entriegelungsbereiches.

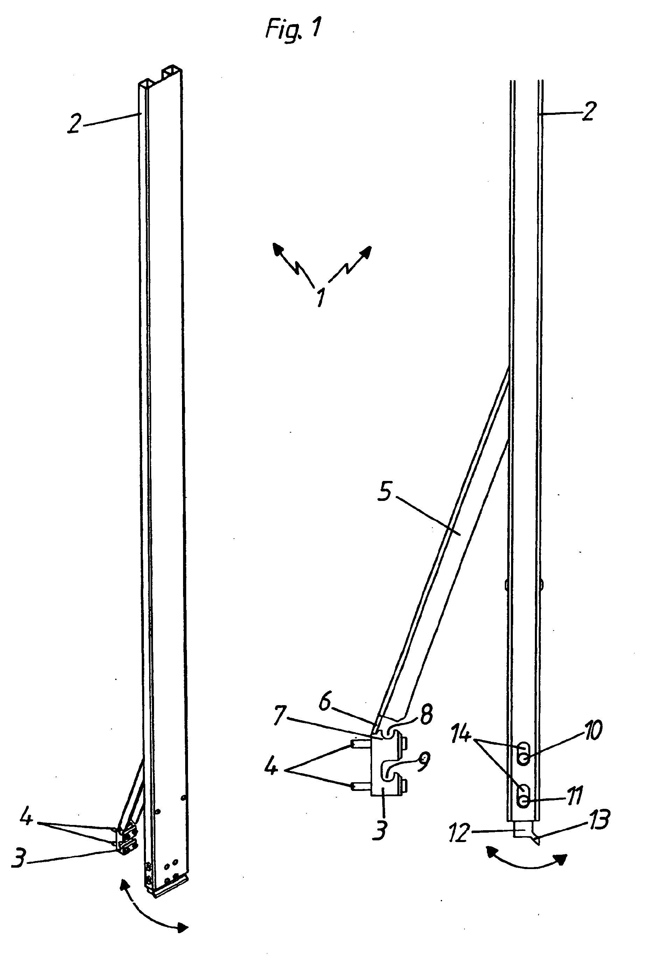

Figur 1 zeigt als Prinzipskizze die erfindungsgemäße Einrichtung zum Festlegen einer, in diesem Beispiel verschiebbar ausgebildeten, Runge 1 im Bereich eines nicht weiter dargestellten Nutzfahrzeugaufbaus. Die Runge 1 beinhaltet ein in diesem Beispiel C-förmig ausgebildetes, Rungenprofil 2, das relativ zum Nutzfahrzeugaufbau schwenkbar (Pfeilrichtung) ist. Mit dem Nutzfahrzeugaufbau ist ein Rungenlager 3 über nur angedeutete Schrauben 4 verbindbar. Das Rungenlager 3 ist somit stationärer Bestandteil des Nutzfahrzeugaufbaus. Mit dem Rungenprofil 2 wirkt eine einseitig gelagerte Schwinge 5 zusammen, was in den folgenden Figuren näher beschrieben wird. Die Schwinge 5 läuft in einen Stützbereich 6 aus, der in einem entsprechend geformten Profil 7 des Rungenlagers 3 verlagerbar ist. Das Rungenlager 3 beinhaltet in diesem Beispiel zwei Verriegelungsbereiche 8,9, in welche Verriegelungsmittel 10,11 durch Schwenken des Rungenprofils 2 bei abgestützter Schwinge 5 in verriegelnder/entriegelnder Weise einbringbar, respektive aus den Verriegelungsbereichen 8,9 entfembar sind. In dieser Figur erkennbar ist ein in Längsrichtung des Rungenprofils 2 bewegbarer Schieber 12, der mit einem Handgriff 13 versehen ist. Ebenfalls nicht dargestellt ist der Dachaufbau. Im Rungenprofil 2 sind längliche Ausnehmungen 14 eingebracht, in welchen die bolzenartig ausgebildeten Verriegelungsmittel 10,11 zwischen den die Ausnehmungen 14 begrenzenden Anschlagflächen geführt sind.

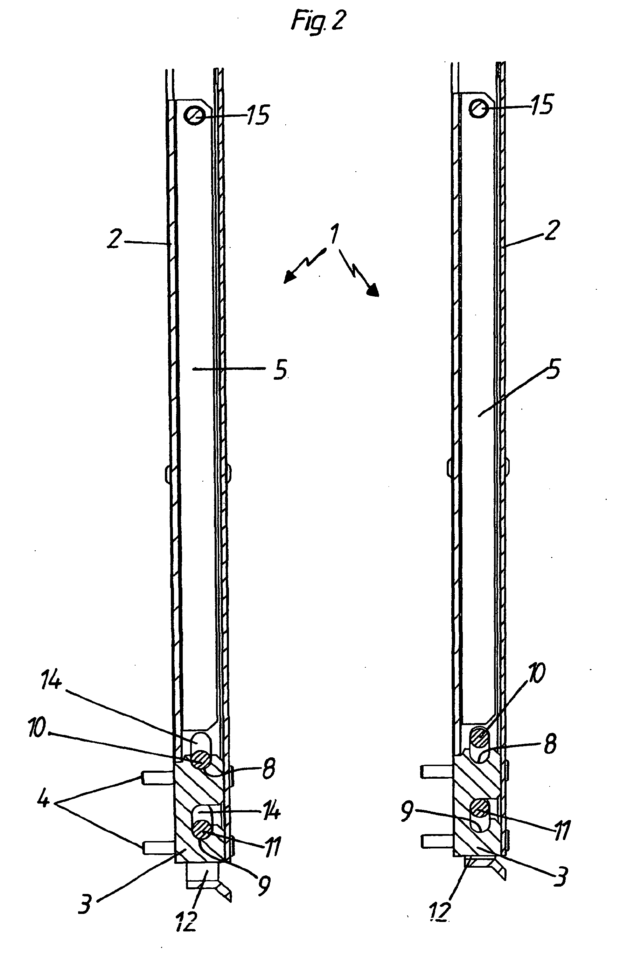

Figur 2 zeigt einen Querschnitt durch Figur 1. Erkennbar ist das Rungenprofil 2, der Schieber 12, das Rungenlager 3, die Schrauben 4, die Verriegelungsbereiche 8,9 sowie die Verriegelungsmittel 10,11. Die Schwinge 5 verfügt über einen Anlenkungsbereich 15 und ist somit relativ zum Rungenprofil 2, schwenkbar.

Der linke Teil der Figur 2 zeigt den verriegelten Zustand der Runge 1, während der rechte Teil der Figur 2 den sich in der Entriegelungsphase befindlichen Zustand der Runge 1 wiedergibt. Im verriegelten Zustand ruhen die bolzenartig ausgebildeten Verriegelungsmittel 10,11 des Schiebers 12 auf den entsprechend profilierten Verriegelungsbereichen 8,9 des Rungenlagers 3. Erkennbar sind die Ausnehmungen 14 im Rungenprofil 2. In umgekehrter Weise (siehe rechtes Bild der Figur 2) kann nun der Entriegelungsvorgang eingeleitet werden, indem das Rungenprofil 2 samt Stützbereich 6 der Schwinge 5 aus dem Bereich des Rungenlagers 3 entfernt werden. Somit kann eine, den jeweiligen Anforderungen entsprechende Öffnung im Bereich des nicht weiter dargestellten Nutzfahrzeugaufbaus erzeugt werden.

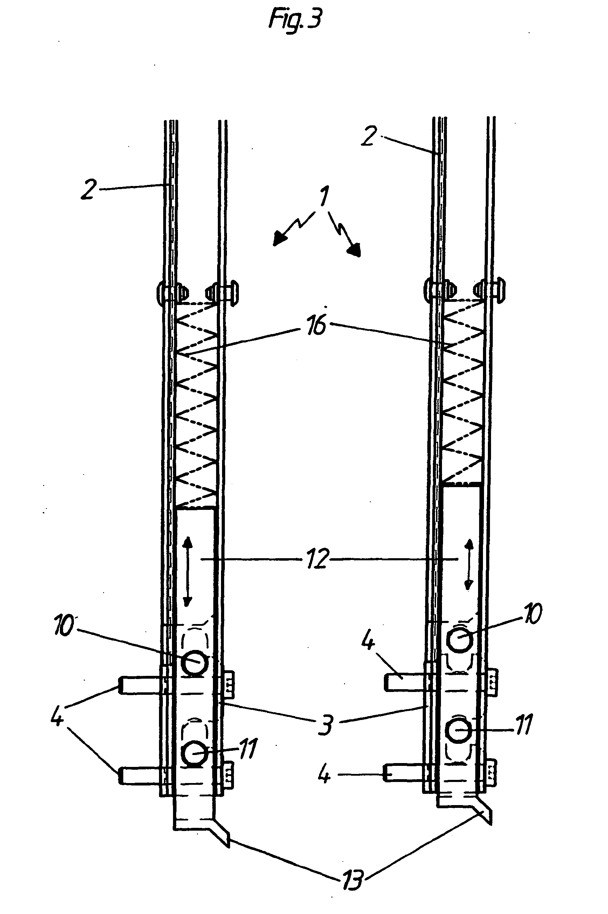

Figur 3 zeigt eine Teilansicht der in den Figuren 1 und 2 dargestellten Runge 1. Auch hier zeigt der linke Teil der Figur 3 den verriegelten Zustand der Runge 1, während der rechte Teil den in der Entriegelungsphase befindlichen Zustand der Runge 1 wiedergibt. Dargestellt ist der innerhalb des Rungenprofils 2 in dessen Längsrichtung gegen die Kraft einer Feder 16 bewegbare Schieber 12, in dessen freiem Endbereich der Handgriff 13 vorgesehen ist. Ferner erkennbar ist das Rungenlager 3 samt Befestigungsschrauben 4. Die als Bolzen ausgebildeten Verriegelungsmittel 10,11 sind einmal dargestellt in verriegelter Position (linker Teil der Figur 3) und in entriegelnder Stellung (rechter Teil der Figur 3).

Sobald sich die in Figur 1 dargestellte Stellung (Entriegelungsposition) eingestellt hat, kann die Schwinge 5, respektive deren Stützbereich 6, vom Profil 7 des Rungenlagers 3 abgehoben und zusammen mit der Runge 1 parallel zum Nutzfahrzeugaufbau verschoben werden.

Gleiches gilt in umgekehrter Reihenfolge, indem zur Fixierung der Runge 1 relativ zum Nutzfahrzeugaufbau der Stützbereich 6 der Schwinge 5 im Profil 7 des Rungenlagers 3 positioniert und das Rungenprofil 2 in Richtung des Rungenlagers 3, um den Anlenkbereich 15 der Schwinge 5 schwenkbar, bewegt wird.

### Bezugszeichenliste

- 1: Runge
- 2: Rungenprofil
- 3: Rungenlager
- 4: Befestigungsschrauben
- 5: Schwinge
- 6: Stützbereich
- 7: Profil
- 8: Verriegelungsbereich
- 9: Verriegelungsbereich
- 10: Verriegelungsmittel
- 11: Verriegelungsmittel
- 12: Schieber
- 13: Handgriff
- 14: Ausnehmung
- 15: Anlenkbereich
- 16: Feder

## Patentansprüche

1. Einrichtung zum Festlegen einer, insbesondere verschiebbar ausgebildeten, Runge (1) im Bereich eines Nutzfahrzeugaufbaus, zumindest beinhaltend ein Rungenprofil (2), das, relativ zum Nutzfahrzeugaufbau schwenkbar, im Bereich eines mit dem Nutzfahrzeugaufbau verbundenen Rungenlagers (3) in verriegelnder bzw. entriegelnder Weise in Wirkverbindung steht bzw. daraus entfernbar ist, wobei ein in Längsrichtung des Rungenprofils (2) bewegbarer Schieber (12) vorgesehen ist, wobei der Schieber (12) in dem dem Rungenlager (3) zugewandten Endbereich des Rungenprofils (2) vorgesehen ist und Verriegelungsmittel (10, 11) beinhaltet, die im Verlauf des Schwenkvorgangs des Rungenprofils (2) in einem Verriegelungslereich (8, 9) des Rungenlagers (3) positionierbar bzw. daraus entfernbar sind, **dadurch gekennzeichnet, dass** die Verriegelungsmittel (10, 11) durch Bolzen gebildet sind, die im Bereich entsprechend geformter Verriegelungsbereiche (8, 9) des Rungenlagers einbringbar bzw. daraus entfernbar sind.

2. Einrichtung nach Anspruch 1, **dadurch gekennzeichnet, dass** das Rungenprofil (2) mit einer einseitig im Bereich des Rungenprofils (2) gelagerten Schwinge (5) zusammenwirkt, deren freies Ende, einen Stützbereich (6) bildend, mit dem Rungenlager (3) in Wirkverbindung bringbar ist.

3. Einrichtung nach Anspruch 1 oder 2, **dadurch gekennzeichnet, dass** das Rungenprofil (2) im Querschnitt etwa C-förmig ausgebildet ist.

4. Einrichtung nach Anspruch 2, **dadurch gekennzeichnet, dass** der Stützbereich (6) in ein rungenlagerseitig vorgesehenes Profil (7) eingreift und im Verlauf der Schwenkbewegung des Rungenprofils (2) darauf abgestützt ist.

5. Einrichtung nach einem der Ansprüche 1 bis 4, **dadurch gekennzeichnet, dass** der Schieber (12) relativ zum Rungenprofil (2) gegen die Kraft einer Feder (16) auslenkbar ist.

6. Einrichtung nach einem der Ansprüche 1 bis 5, **dadurch gekennzeichnet, dass** das freie Ende des Schiebers (12) als Handgriff (13) ausgebildet ist.

7. Einrichtung nach einem der Ansprüche 1 bis 6, **dadurch gekennzeichnet, dass** das Rungenprofil (2) über längliche Ausnehmungen (14) verfügt, im Bereich derer die Bolzen (10, 11) in den Schieber (12) relativ zum Rungenprofil (2) anhebender bzw. absenkender Weise elastisch geführt sind.

## Claims

1. A device for fixing a stanchion (1), in particular designed so as to be displaceable, in the region of the body of a utility vehicle, at least comprising a stanchion profile (2) which, in a manner pivotable relative to the body of the utility vehicle, is operatively connected in a locking or unlocking manner in the region of a stanchion support (3) connected to the body of the utility vehicle and is capable of being removed therefrom respectively, wherein a slide (12) movable in the longitudinal direction of the stanchion profile (2) is provided, wherein the slide (12) is provided in the end region of the stanchion profile (2) facing the stanchion support (3) and contains locking means (10, 11) which are capable of being positioned in a locking region (8, 9) of the stanchion support (3) during the pivoting of the stanchion profile (2) and of being removed therefrom respectively, **characterised in that** the locking means (10, 11) are formed by pins which are capable of being introduced into the region of suitably shaped locking regions (8, 9) of the stanchion support and of being removed therefrom respectively.

2. A device according to claim 1, **characterised in that** the stanchion profile (2) co-operates with an oscillating arm (5) which is mounted at one end in the region of the stanchion profile (2) and the free end of which is capable of being operatively connected to the stanchion support (3) so as to form a supporting region (6).

3. A device according to claim 1 or 2, **characterised in that** the stanchion profile (2) is made substantially C-shaped in cross-section.

4. A device according to claim 2, **characterised in that** the supporting region (6) engages in a profiled member (7) provided on the side of the stanchion support and is supported on said stanchion profile (2) during the pivoting movement thereof.

5. A device according to any one of claims 1 to 4, **characterised in that** the slide (12) is capable of being swung out relative to the stanchion profile (2) against the force of a spring (16).

6. A device according to any one of claims 1 to 5, **characterised in that** the free end of the slide (12) is designed as a handle (13).

7. A device according to any one of claims 1 to 6, **characterised in that** the stanchion profile (2) has elongate recesses (14), in the region of which the pins (10, 11) are moved resiliently in a manner raising or lowering the slide (12) relative to the stanchion profile (2).

## Revendications

1. Dispositif de fixation d'un rancher (1), réalisé notamment de manière mobile, dans la zone d'une plate-forme d'un véhicule utilitaire, comportant au moins un profilé formant rancher (2), qui est disposé, de manière pivotante par rapport à la plate-forme du véhicule utilitaire, dans une liaison active de manière verrouillable ou déverrouillable dans la zone d'un palier (3) du rancher, relié à la plate-forme du véhicule utilitaire, et peut être retiré hors de ladite liaison, sachant qu'il est prévu un coulisseau (12), mobile dans le sens longitudinal du profilé formant rancher (2), ledit coulisseau (12) étant prévu dans la zone d'extrémité du profilé formant rancher (2), orientée vers le palier (3) du rancher et contenant des moyens de verrouillage (10, 11) qui, au cours du processus de pivotement du profilé formant rancher (2), peuvent être positionnés dans une partie de verrouillage (8, 9) du palier (3) du rancher ou être retirés hors de celle-ci, **caractérisé en ce que** les moyens de verrouillage (10, 11) sont formés par des boulons qui peuvent être introduits dans la zone des parties de verrouillage (8, 9) du palier (3) du rancher, conçues avec une forme correspondante, ou peuvent être retirés hors de ladite zone.

2. Dispositif selon la revendication 1, **caractérisé en ce que** le profilé formant rancher (2) coopère avec un bras oscillant (5), qui est monté sur un côté dans la zone du profilé formant rancher (2) et dont l'extrémité libre, formant une zone d'appui (6), peut être amenée en liaison active avec le palier (3) du rancher.

3. Dispositif selon la revendication 1 ou 2, **caractérisé en ce que** le profilé formant rancher (2) est réalisé avec une section sensiblement en forme de C.

4. Dispositif selon la revendication 2, **caractérisé en ce que** la zone d'appui (6) s'engage dans un profilé (7), prévu du côté du palier du rancher, et prend appui sur ledit profilé pendant le mouvement de pivotement du profilé formant rancher (2).

5. Dispositif selon l'une quelconque des revendications 1 à 4, **caractérisé en ce que** le coulisseau (12) peut être déplacé par rapport au profilé formant rancher (2) à l'encontre de la force d'un ressort (16).

6. Dispositif selon l'une quelconque des revendications 1 à 5, **caractérisé en ce que** l'extrémité libre du coulisseau (12) est réalisée sous forme de poignée (13).

7. Dispositif selon l'une quelconque des revendications 1 à 6, **caractérisé en ce que** le profilé formant rancher (2) comporte des évidements (14) allongés, dans la zone desquels les boulons (10, 11) sont guidés élastiquement dans le coulisseau (12) de manière à être relevés ou abaissés par rapport au profilé formant rancher (2).
